Europäisches Patentamt

European Patent Office

Office européen des brevets

(11) Numéro de publication: **0 277 891**
**A1**

# (12) DEMANDE DE BREVET EUROPEEN

(21) Numéro de dépôt: **88420014.8**

(22) Date de dépôt: **14.01.88**

(51) Int. Cl.⁴: **B 62 K 19/20**
**B 21 D 53/86**

(30) Priorité: **14.01.87 FR 8700535**

(43) Date de publication de la demande:
**10.08.88 Bulletin 88/32**

(84) Etats contractants désignés:
**AT BE CH DE ES FR GB IT LI NL**

(71) Demandeur: **BOCAMA**
**50, rue Louis Pradel Zac Corbas Montmartin**
**F-69960 Corbas (FR)**

(72) Inventeur: **Sabatier, Roger**
**330 E Balmont Ouest**
**F-69009 Lyon (FR)**

**Masson, Roger**
**128 Rue Pierre Corneille**
**F-69003 Lyon (FR)**

(74) Mandataire: **Karmin, Roger et al**
**Cabinet MONNIER 150, cours Lafayette BP 3058**
**F-69393 Lyon Cédex 03 (FR)**

(54) **Raccord de cadre de bicyclette et analogue et procédé pour sa mise en oeuvre.**

(57) La périphérie de la découpe (25) du raccord (2) comporte un bord tombé (6) déterminant une arête extrême éffilée tournée vers l'intérieur du raccord et destinée à appuyer contre la paroi externe du tube (1) auquel il doit être brasé. On élimine ainsi tous jeux entre ce tube et le raccord de telle sorte qu'on n'assiste pas à des coulures de brasage.

Fig.5

EP 0 277 891 A1

**Description**

On sait que les cadres de bicyclette sont réalisés au moyen de tubes assemblés grâce à des raccords brasés aux extrémités considérées desdits tubes.

Les constructeurs de cadres pour bicyclette s'équipent progressivement avec des machines de brasage automatique. Ces dernières nécessitent des ajustements précis entre le tube et les raccords qui sont fabriqués suivant deux méthodes.

La première consiste à aléser les raccords de manière que leur ajustage avec les tubes soit précis et assure une excellente brasure sans que l'on assiste à des coulures, en particulier dans la découpe desdits raccords.

Par contre, les raccords alésés par enlèvement de matière sont d'un coût de revient prohibitif et bien souvent ils sont disgracieux du fait de leur épaisseur.

On réalise aussi, et dans la plupart des cas, les raccords en question à partir d'un flan plat de métal qui est convenablement déformé par des transformations plastiques successives.

L'inconvénient de tels raccords réside dans le fait qu'ils plaquent difficilement sur la paroi extérieure des tubes par suite du faux-rond de ces tubes.

C'est avec l'utilisation de tels raccords qu'on assiste à des coulures de cuivre ou d'alliage de brasage lors de leur assemblage à des tubes. Ces coulures entraînent d'une part un défaut de brasage et d'autre part une opération de reprise onéreuse. Bien entendu, lorsque la brasure est déficiente on doit refouler l'assemblage réalisé, ce qui entraîne des coûts non négligeables.

Les perfectionnements qui font l'objet de la présente invention visent à remédier aux inconvénients des raccords du type obtenus par déformation plastique d'un flan et à leur permettre d'être parfaitement brasés sur un tube.

A cet effet, la périphérie de la découpe des raccords suivant l'invention comporte un bord tombé déterminant une arête extrême tournée vers l'intérieur du raccord et destiné à s'appuyer contre la paroi externe du tube afin de rattraper le jeu entre ce dernier et le raccord et d'éliminer ainsi les coulures de brasage.

La présente invention se rapporte aussi au procédé de fabrication d'un tel raccord qui consiste à emboutir à froid le flan tout en le détourant en vue de former un bord tombé à arête vive sur au moins une partie de la périphérie de son détourage.

Le dessin annexé, donné à titre d'exemple, permettra de mieux comprendre l'invention, les caractéristiques qu'elle présente et les avantages qu'elle est susceptible de procurer :

Fig. 1 illustre le montage d'un raccord sur l'extrémité du tube de direction d'un cadre de bicyclette.

Fig. 2 en est une coupe à plus grande échelle suivant II-II (fig. 1). Cette vue illustre comment les joues du raccord baillent par rapport au tube de direction.

Fig. 3 en est une vue de détail à plus grande échelle.

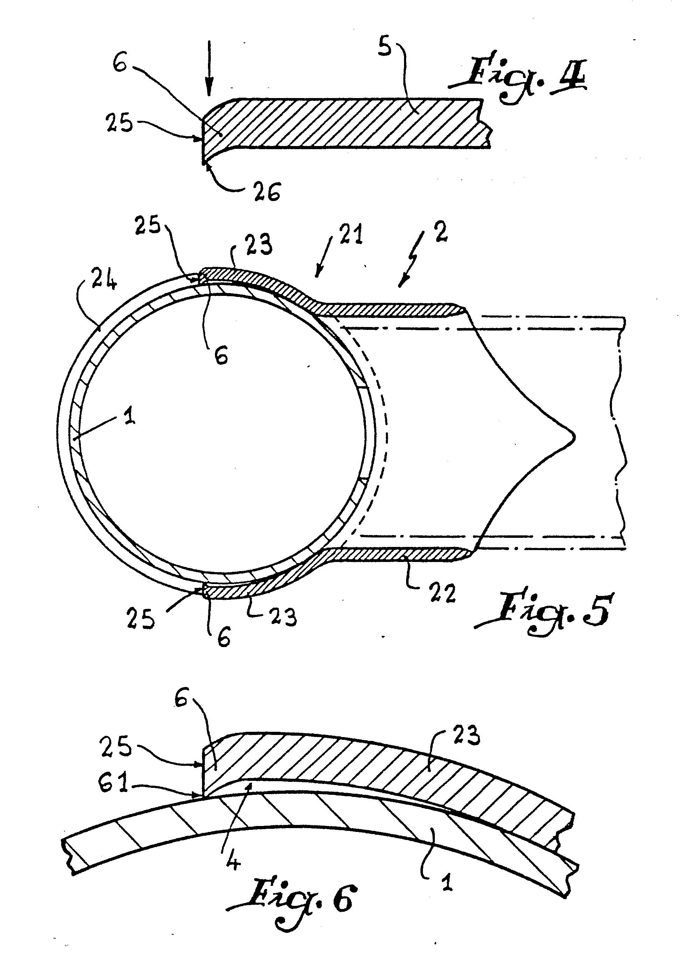

Fig. 4 illustre comment on déforme le flan plat destiné à la fabrication d'un raccord, en utilisant le procédé suivant l'invention.

Fig. 5 est une vue semblable à celle de fig. 2, mais illustrant la manière dont le bord tombé coopère avec le tube en vue d'éliminer le jeu entre ce dernier et le raccord.

Fig. 6 en est une vue de détail à très grande échelle.

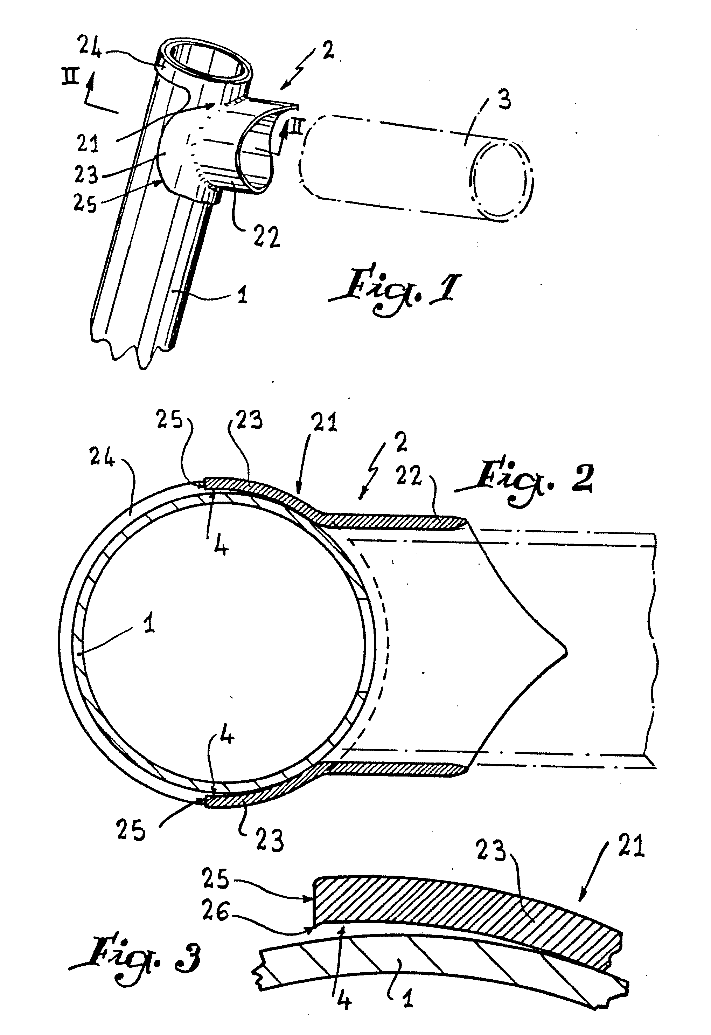

On a illustré en fig. 1 le tube de direction 1 d'un cadre de bicyclette à la partie supérieure duquel doit être brasé un raccord 2 réalisé au moyen de deux manchons sécants dont l'un 21 coopère avec le tube 1, tandis que le second 22 est destiné à recevoir le tube horizontal 3 d'un cadre pour homme et qui a été illustré en traits discontinus.

A la manière connue, le manchon 21 est réalisé sous la forme de deux joues symétriques 23 qui sont réunies à la partie supérieure par une collerette 24 destinée à entourer le tube 1. On ne s'étendra pas davantage sur la forme d'un tel raccord bien connu dans la pratique.

La difficulté rencontrée consiste dans le fait que les deux joues 23 baillent généralement par rapport à la paroi extérieure du tube 1, par exemple parce que ce dernier présente un léger faux rond. Le jeu entre la périphérie de la découpe 25 du raccord 2 et le tube a été référencé 4 en fig. 2 et 3.

On observe en fig. 3 que la découpe 25 du manchon 21, qui a été effectuée par détourage simple, donne naissance à une bavure 26 qui est insignifiante eu égard à l'importance du jeu 4.

C'est dans ces conditions que, lors du brasage du raccord 2 sur le tube 1, la brasure peut couler dans l'espace compris entre les joues 23 et le tube 1, pour venir former une goutte entre la découpe 25 et le tube 1 en entraînant les inconvénients cités plus haut.

Conformément à l'invention, le flan plat 5 destiné à la fabrication d'un raccord 2 par déformation plastique est déformé en même temps qu'il est détouré en vue de former un bord tombé 6 sur au moins une partie de la périphérie de la découpe 25 du raccord 2. Ce bord se termine par une arête vive 61.

L'importance du bord tombé 6 est telle qu'il est d'une hauteur au moins égale au jeu maximal 4 pouvant exister entre les joues 23 du raccord et le tube 1. De ce fait, lorsque le tube 1 est emmanché dans le manchon 21 du raccord 2, c'est l'arête terminale vive 61 du bord tombé 6 qui vient porter contre la paroi extérieure du tube 1, en assurant ainsi l'élimination du jeu 4.

Ainsi, lorsque l'ensemble du tube 1 et du raccord 2 est porté à une température telle qu'une pastille de brasure placée à la jonction de la face intérieure du raccord et de la paroi extérieure du tube 1 fond, la brasure fondue se répartit par capilarité de manière uniforme entre le tube et les joues du raccord, sans qu'aucune goutte ne puisse s'écouler au-delà du bord tombé 6 correspondant à la découpe 25.

On a ainsi réalisé un raccord pour cadre de bicyclette ou autre collier destiné à être brasé sur un tube, qui permet d'éliminer tout problème de brasage sans que son procédé de fabrication soit plus onéreux, puisque l'opération d'emboutissage du bord tombé 6 s'effectue en même temps que le détourage du flan 5 destiné à la fabrication du raccord.

## Revendications

1. Procédé de fabrication d'un collier destiné à être brasé sur un tube (1), notamment d'un raccord (2) de cadre de bicyclette, caractérisé en ce que le flan plat détouré (5) est déformé par emboutissage à froid pour former un bord tombé (6) sur au moins une partie de la périphérie de sa découpe (25), ledit bord (6) étant orienté vers l'intérieur du raccord après sa mise en forme.

2. Procédé (2) de cadre de bicyclette, caractérisé en ce qu'il est réalisé par mise en oeuvre du procédé suivant la revendication 1.

3. Raccord (2) suivant la revendication 2, caractérisé en ce que la périphérie de sa découpe (25) comporte un bord tombé (6) déterminant une arête extrême vive (61) tournée vers l'intérieur du raccord (2) et destinée à appuyer contre la paroi extérieure du tube (1) auquel il doit être brasé afin de rattraper le jeu (4) entre ce dernier et le raccord (2) et d'éliminer les coulures de brasage.

0277891

Fig. 1

Fig. 2

Fig. 3

0277891

Fig. 4

Fig. 5

Fig. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-1 365 860 (BOUCHET) <br> * En entier * <br> --- | 1,2 | B 62 K 19/20 <br> B 21 D 53/86 |
| A | GB-A- 434 854 (THE CHASE CO., INC.) <br> * Figures * <br> --- | 1 | |
| A | GB-A- 399 106 (THE CHASE CO., INC.) <br> * Figures * <br> ----- | 1 | |

DOMAINES TECHNIQUES RECHERCHES (Int. Cl.4)

B 62 K
B 21 D

Le présent rapport a été établi pour toutes les revendications

| Lieu de la recherche | Date d'achèvement de la recherche | Examinateur |
|---|---|---|
| LA HAYE | 19-04-1988 | FRANKS B.G. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
.........................................................................
& : membre de la même famille, document correspondant

EPO FORM 1503 03.82 (P0402)